# EUROPÄISCHE PATENTSCHRIFT

(11) **EP 3 071 165 B1**
(45) Veröffentlichungstag und Bekanntmachung des Hinweises auf die Patenterteilung: **10.05.2017**
(21) Anmeldenummer: 14795573.6
(22) Anmeldetag: 24.10.2014
(51) Int. Cl.: A61G 1/02, A61G 7/05

(54) **STEUERUNG VON AN EINEM VERFAHRTEIL ANGEBRACHTEN ROLLEN**
CONTROL OF ROLLERS MOUNTED ON A MOVABLE PART
COMMANDE DE ROULETTES MONTÉES SUR UN ÉLÉMENT MOBILE

(30) Priorität: 18.11.2013 DE 202013105191 U; 06.01.2014 DE 102014100056
(43) Veröffentlichungstag der Anmeldung: 28.09.2016
(73) Patentinhaber: Tente GmbH & Co. KG, 42929 Wermelskirchen (DE)
(72) Erfinder: HEIN, Georg, 58515 Lüdenscheid (DE)
(74) Vertreter: Müller, Enno
(86) Internationale Anmeldenummer: PCT/EP2014/072875
(87) Internationale Veröffentlichungsnummer: WO 2015/071076

(56) Entgegenhaltungen:
- EP-A2- 1 911 429
- US-A1- 2003 102 172
- US-A1- 2005 126 835
- US-A1- 2007 157 385

## Beschreibung

Die Erfindung betrifft zunächst eine Steuerung von an einem Verfahrteil angebrachten Rollen nach den Merkmalen des Oberbegriffes des Anspruches 1. Die Erfindung betrifft im Weiteren ein Verfahren zur Steuerung von an einem Verfahrteil angebrachten Rollen nach den Merkmalen des Oberbegriffes des Anspruches 6.

Derartige Verfahreinheiten, beispielsweise ausgebildet als Krankenhausbett, sind in vielfältiger Hinsicht bekannt. Es wird beispielsweise auf die WO 2007/ 093549 A1 (US 2010/ 0281122 A1) verwiesen. Darüber hinaus auch auf die WO 2012/110283 A1 (CA 2825244 A1),

Weiter ist zum Stand der Technik auf die US2007/157385 A1, die US 2003/102172 A1, die EP 1911429 A2 und die US 2005/126835 A1 zu verweisen.

Ausgehend von dem zunächst genannten Stand der Technik beschäftigt sich die Erfindung mit der Aufgabe, eine vorteilhafte Steuerung der Rollen in Kombination mit der Zusatzrolle anzugeben sowie auch ein vorteilhaftes Verfahren zur Steuerung hierzu anzugeben.

Diese Aufgabe ist zunächst beim Gegenstand des Anspruches 1 gelöst, wobei darauf abgestellt ist, dass der Fahrantrieb nur aktiviert werden kann, wenn die eine Bremseinrichtung aufweisende Rolle sich in der Freigabestellung oder der Richtungsfeststellungs-Stellung befindet und die selbsttätige Versetzung der einen oder der mehreren Rollen in die Bremsstellung nur vorgenommen werden kann, wenn der Fahrantrieb nicht aktiviert ist.

Diese Aufgabe ist weiter beim Gegenstand des Anspruches 5 gelöst, wobei darauf abgestellt ist, dass der Fahrantrieb nur aktiviert werden kann, wenn die Rollen sich in der Freigabestellung oder der Richtungsfeststellungs-, Stellung befinden, wobei darüber hinaus die selbsttätige Versetzung der Rollen in die Bremsstellung nur vorgenommen werden kann, wenn der Fahrantrieb nicht aktiviert ist.

Wenn die Rollen sich in der Bremsstellung, insbesondere der Totalfest- stellungs-Stellung befinden, bei welcher also weder eine Bewegung des Rades noch eine Drehung um eine Vertikalachse möglich ist, befinden, kann der Fahrantrieb nicht aktiviert werden. Eine entsprechende Betätigung eines Schalters auf einem Bedienungsteil der Verfahreinheit, wie es bevorzugt vorgesehen ist, erbringt also keine Reaktion.

Die Schaltung ist entsprechend so vorgesehen, dass in der Bremsstellung ein eventueller Befehl oder ein Kommando zur Aktivierung des Fahrbetriebes der Zusatzrolle in der Steuerung unterdrückt wird oder, etwa durch elektrische Trennung des diesbezüglichen Schalters, schon kein Signal erbringen kann.

Auch das Verfahren ist entsprechend so ausgestaltet, dass in der Bremsstellung ein eventueller Befehl oder ein Kommando zur Aktivierung des Fahrbetriebes der Zusatzrolle unterdrückt wird oder jedenfalls keine Reaktion hervorruft.

Hierbei kann steuerungsmäßig wie auch verfahrensmäßig weiter vorgesehen sein, dass die Zusatzrolle, wenn sie in der beschriebenen Weise zwischen einer abgesenkten Stellung, die bevorzugt der zum Fahrantrieb genutzten Stellung entspricht und einer angehobenen Stellung bewegbar ist, aus der angehobenen Stellung auch gar nicht erst in die abgesenkte Stellung verfahrbar ist.

Darüber hinaus kann steuerungsmäßig und verfahrensmäßig vorgesehen sein, dass mit Betätigung der Steuerung beziehungsweise mit Ausübung des Vierfahrens dahingehend, dass eine, mehrere oder alle der Rollen in die Bremsstellung, insbesondere die Totalfeststellungs-Stellung versetzt werden, die Zusatzrolle, wenn sie sich in der abgesenkten Stellung befindet, selbsttätig in die angehobene Stellung verfährt oder verfahren wird.

Hierbei ist weiter bevorzugt nur in der abgesenkten Stellung ein Bodenkontakt des Rades der Zusatzrolle gegeben, so dass hierüber ein Antrieb der Verfahreinheit erfolgen kann. In der angehobenen Stellung befindet sich das Rad bevorzugt regelmäßig in Abstand zu dem Boden, auf welchem im Übrigen die Verfahreinheit steht bzw. verfährt.

In weiterer Ausgestaltung ist auch vorgesehen, dass eine selbsttätige Versetzung der Rollen in eine Bremsstellung vorgesehen ist, beispielsweise wenn die Verfahreinheit zum Stillstand gekommen ist. Dies kann beispielsweise über einen Bewegungssensor detektiert werden. Der Bewegungssensor kann entfernt von den Rollen an der Verfahreinheit angebracht sein. Es kann sich um einen Bewegungssensor handeln, der eine Bewegung eines Rades, gegebenenfalls auch ergänzend oder allein eines Rades der Zusatzrolle, erfasst, alternativ oder ergänzend aber auch um einen Bewegungssensor, der eine Bewegung der Verfahreinheit als solcher erfasst. Es kann für jede Rolle, auch die Zusatzrolle ein Bewegungssensor vorgesehen sein. Bevorzugt ist jedoch nur ein Bewegungssensor für alle Rollen vorgesehen, der geeignet in die Schaltung zur Betätigung der Rollen eingebunden ist.

Die die Schaltung oder das Verfahren vorsieht, dass die selbsttätige Versetzung der Rollen in die Bremsstellung nur vorgesehen ist bzw, nur vorgenommen werden kann, wenn der Fahrantrieb nicht aktiviert ist, kann, solange ein Zusatzantrieb oder ein Antrieb überhaupt für die Verfahreinheit über die Zusatzrolle gegeben ist, selbst auf eine entsprechende Betätigung eines Schalters, Touch-Displays oder dergleichen hin, obwohl prinzipiell vorgesehen, keine Versetzung der Rollen in die Bremsstellung erreicht werden.

Dies kann auch dahingehend ergänzt sein, dass die Versetzung der Rollen in die Bremsstellung schon dann nicht möglich ist bzw. nicht vorgenommen werden kann, wenn, soweit vorgesehen, die Zusatzrolle sich in der abgesenkten Stellung befindet.

Darüber hinaus kann die Verfahreinheit bevorzugt über einen Akkumulator verfügen. Mit dem Akkumulator als Energiequelle kann die Zusatzrolle elektrisch angetrieben werden, wenn die Verfahreinheit sich netzunabhängig bewegt. Dieser Akkumulator kann mittels einer Verbindung zum elektrischen Netz, vorzugsweise über einen Netzstecker, der dann weiter bevorzugt Teil der Verfahreinheit ist, bei Bedarf bzw. Gelegenheit, wenn die Verfahreinheit ohnehin stillsteht oder nicht gebraucht wird, durch Einstecken in eine Netz-Steckdose wieder aufgeladen werden. Hierbei ist weiter bevorzugt vorgesehen, dass bei einer Herstellung der Netzverbindung zwischen dem Netzstecker und der Steckdose die Rollen selbsttätig in die Bremsstellung versetzt werden und/ oder der Fahrantrieb nicht aktiviert werden kann.

Die Tatsache, dass der Netzstecker in eine entsprechende Steckdose gesteckt wird, kann über die dann anliegende Netzspannung, wozu in der Steuerungseinheit oder zugeordnet zu der Steuerungseinheit der Verfahreinheit eine entsprechende Detektionsschaltung vorgesehen ist, erfasst werden.

Dadurch, dass mit Herstellen der Netzverbindung die Rollen selbsttätig in die Bremsstellung versetzt werden, ist sichergestellt, dass während des Aufladens keine Bewegung der Verfahreinheit erfolgen kann, also der Netzstecker nicht versehentlich aus der Steckdose gerissen werden kann.

Dadurch, dass zusätzlich oder alternativ der Fahrantrieb der Zusatzrolle bei der Netzverbindung nicht aktiviert werden kann, kann insbesondere sichergestellt werden, dass die Verfahreinheit nicht noch mit der Kraft des elektrischen Antriebes bewegt werden kann.

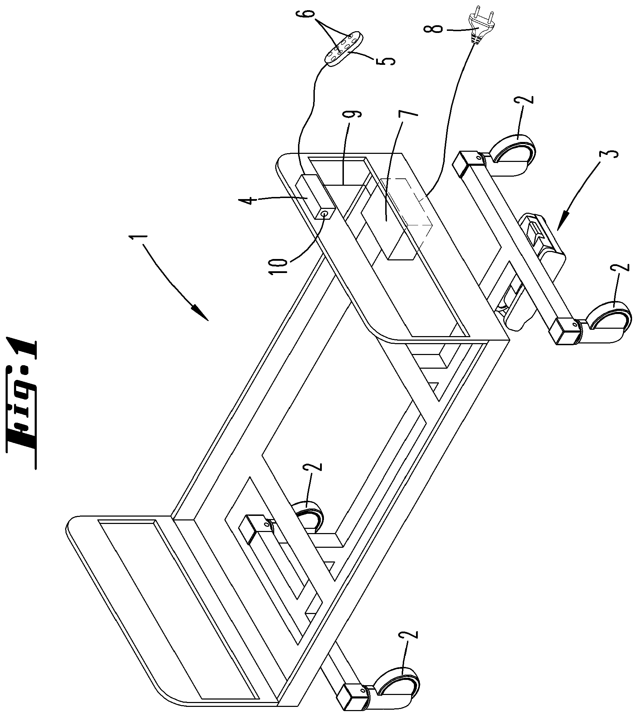

Dargestellt und beschrieben ist mit Bezug zu der einzigen Figur ein hier nur als Chassis dargestelltes Krankenhausbett 1, das eine mögliche Verfahreinheit ist, die hier betroffen ist.

Das Krankenhausbett weist vier Rollen 2 auf, die beispielsweise entsprechend der WO 2008/055831 A1 (US 2010/0077562 A1) oder der WO 2012/171814 A1 ausgebildet sind.

Die Verfahreinheit bzw. das Krankenhausbett 1 weist weiter eine Zusatzrolle 3 auf, die in der wiedergegebenen Figur in der angehobenen Stellung dargestellt ist. Bezüglich dieser Zusatzrolle wird auf die bereits eingangs genannten Druckschriften auch an dieser Stelle verwiesen.

Die Verfahreinheit bzw. das dargestellte Krankenhausbett 1 weist weiter eine Steuerungseinrichtung 4 auf, die über ein Handteil 5, das auch als Bedienungspult in die Verfahreinheit selbst integriert sein kann, eine Steuerung und Bedienung der Rollen 2 und der Zusatzrolle 3 ermöglicht. Auf dem Handteil 5 können hierzu verschiedene Schalter und Anzeigen 6 vorgesehen sein.

Die Verfahreinheit ist darüber hinaus mit einem Akkumulator 7 versehen. Mittels des Akkumulators kann über eine geeignete Stromverbindung das antreibbare Rad der Zusatzrolle 3 elektrisch angetrieben werden.

Zum Aufladen des Akkumulators 7 ist ein Netzstecker 8 vorgesehen, der bei Stillstand der Verfahreinheit in eine übliche Steckdose eines elektrischen Netzes zum Aufladen des Akkumulators 7 eingesteckt werden kann.

Mit der Leitung 9 ist angedeutet, dass auch der Akkumulator 7 und der Netzstecker 8 mit der Steuerungseinheit 4 verbunden sind. Insbesondere kann in der Steuerungseinheit 4 detektiert werden, ob der Netzstecker 8 sich in einer Steckdose befindet oder nicht.

Die Rollen 2, wie bei dem Ausführungsbeispiel auch bevorzugt gegeben, sind sämtlich mit einem eigenen Elektromotor ausgerüstet, um eine Verstellung der Rolle in eine Freilaufstellung, eine Richtungsfeststellungs-Stellung oder eine Totalfeststellung zu ermöglichen.

Weiter sind die Rollen 2, um auch bei einem möglichen Ausfall einer elektrischen Versorgung eine Bedienung zu ermöglichen, zusätzlich von Hand betätigbar. Hierzu wird ergänzend auf die bereits genannten Druckschriften wie etwa die WO 2012/171814 verwiesen.

Eine solche von Hand Betätigung bzw. manuelle Betätigung kann insbesondere eine Lösung der Totalfeststellung bedeuten.

Über die Zusatzrolle 3 kann durch das antreibbare Rad eine die Verfahreinheit bedienende Person eine Unterstützung in der Bewegung der Verfahreinheit erhalten. Beim Ausführungsbeispiel ist dies entsprechend nur in der abgesenkten Stellung der Zusatzrolle 3, bei welcher das Rad der Zusatzrolle sich in Bodenkontakt befindet, möglich.

Die verwirklichte Steuerung sieht vor, dass der Fahrantrieb des Rades der Zusatzrolle 3 nur aktiviert werden kann, beim Ausführungsbeispiel über das Handteil 5, wenn die Rollen 2 sich in der Freigabestellung oder der Richtungsfeststellungs-Stellung befinden.

Weiter ist vorgesehen, dass, beispielsweise vermittels eines Bewegungssensors 10, der, wie angedeutet, sich in der Steuerungseinheit 4 befinden kann, von der Steuerung selbsttätig erfasst wird, ob die Verfahreinheit, hier das Krankenhausbett 1, sich in Bewegung befindet oder stillsteht. In diesem Zusammenhang ist vorgesehen, dass bei Stillstand der Verfahreinheit die Rollen 2 selbsttätig in die Bremsstellung, nämlich hier die Stellung der Totalfeststellung, versetzt werden. Diese Versetzung in die Totalfeststellung der Rollen 2 kann aber nur dann erfolgen, insbesondere nur dann selbsttätig erfolgen, wenn über die Steuerung zugleich erfasst ist, dass der Fahrantrieb der Zusatzrolle 3 nicht aktiviert ist. Zudem kann eine selbsttätige Versetzung der Rollen 2 in die Bremsstellung, hier die Totalfeststellung, nur erfolgen, wenn zudem durch die Steuerung erfasst ist, dass das Krankenhausbett 1 sich nicht in Bewegung befindet. Dies etwa über den schon genannten Bewegungssensor 10.

Darüber hinaus sieht die verwirklichte Steuerung vor, dass bei Herstellung einer Netzverbindung, also Einstecken des Netzsteckers 8 in eine entsprechende Steckdose, die Rollen 2 selbsttätig in die Bremsstellung, d. h. hier die Totalfeststellung versetzt werden. Zugleich sieht die Steuerung vor, dass in diesem Fall der Fahrantrieb des Rades der Zusatzrolle 3 nicht (mehr) aktiviert werden kann.

### Bezugszeichenliste

- 1: Krankenhausbett
- 2: Rolle
- 3: Zusatzrolle
- 4: Steuerungseinheit
- 5: Handteil
- 6: Schalter/ Anzeige
- 7: Akkumulator
- 8: Netzstecker
- 9: Leitung
- 10: Bewegungssensor

## Patentansprüche

1. Steuerung von an einem Verfahrteil wie beispielsweise einem Krankenhausbett (1) angebrachten Rollen (2), wobei eine, mehrere oder alle Rollen (2) eine Bremseinrichtung aufweisen, womit die eine oder die mehreren oder alle Rollen in eine Richtungsfeststellung-Stellung, eine Freigabestellung und selbsttätig in eine Bremsstellung versetzbar ist bzw. sind, wobei weiter alle Rollen (2) elektrisch und eine oder mehrere oder alle Rollen (2) zusätzlich manuell betätigbar sind, und wobei darüber hinaus eine Zusatzrolle (3) mit einem über einen aktivierbaren Fahrantrieb verfügenden Rad vorgesehen ist, wobei der Fahrantrieb nur aktiviert werden kann, wenn die eine oder die mehrere oder alle eine Bremseinriehtung aufweisende Rollen (2) sich in der Freigabestellung oder der Richtungsfeststellungs-Stellung befinden, **dadurch gekennzeichnet, dass**
die selbsttätige Versetzung der einen oder der mehreren oder aller Rollen in die Bremsstellung nur vorgenommen werden kann, wenn der Fahrantrieb nicht aktiviert ist.

2. Steuerung nach Anspruch 1, **dadurch gekennzeichnet, dass** die Zusatzrolle (3) zwischen einer abgesenkten und einer angehobenen Stellung bewegbar ist.

3. Steuerung nach einem der Ansprüche 1 oder 2, **dadurch gekennzeichnet, dass** die Verfahreinheit über einen Akkumulator (7) verfügt, der mittels einer Verbindung zum elektrischen Netz, vorzugsweise über einen Netzstecker (8), bei Bedarf bzw. Gelegenheit aufgeladen werden kann, und dass bei einer Herstellung der Netzverbindung die eine oder die mehrere oder alle Rollen (2) selbsttätig in die Bremsstellung versetzt werden.

4. Steuerung nach einem der Ansprüche 1 bis 3, **dadurch gekennzeichnet, dass** die Verfahreinheit über einen Akkumulator (7) verfügt, der mittels einer Verbindung zum elektrischen Netz, vorzugsweise über einen Netzstecker (8), bei Bedarf bzw. Gelegenheit aufgeladen werden kann, und dass bei einer Herstellung der Netzverbindung der Fahrantrieb nicht aktiviert werden kann.

5. Verfahren zur Steuerung von an einem Verfahrteil angebrachten Rollen (2), wobei eine, mehrere oder alle Rollen (2) eine Bremseinrichtung aufweisen, die in eine Richtungsfeststellungs-Stellung, eine Freigabestellung und selbsttätig in eine Bremsstellung versetzt werden kann oder versetzt werden können, wobei weiter alle Rollen (2) elektrisch und eine oder mehrere oder alle Rollen (2) zusätzlich manuell betätigt werden können, eine Zusatzrolle (3) mit einem über einen aktivierbaren Fahrantrieb verfügende Rad versehen ist und der Fahrantrieb nur aktiviert werden kann, wenn die eine oder die mehrere oder alle eine Bremseinrichtung aufweisende Rollen (2) sich in der Freigabestellung oder der Richtungsfeststellungs-Stellung befinden, wobei darüber hinaus die selbsttätige Versetzung der einen oder der mehreren oder aller Rollen in die Bremsstellung nur vorgenommen werden kann, wenn der Fahrantrieb nicht aktiviert ist.

6. Verfahren zur Steuerung nach Anspruch 5, **dadurch gekennzeichnet, dass** das Verfahrteil ein Krankenhausbett (1) ist.

7. Verfahren zur Steuerung nach einem der Ansprüche 5 oder 6, **dadurch gekennzeichnet, dass** die Zusatzrolle (3) zwischen einer abgesenkten und einer angehobenen Stellung bewegt werden kann.

8. Verfahren zur Steuerung nach einem der Ansprüche 5 bis 7, **dadurch gekennzeichnet, dass** die Verfahreinheit über einen Akkumulator (7) verfügt, der mittels einer Verbindung zum elektrischen Netz, vorzugsweise über einen Netzstecker (8), bei Bedarf bzw. Gelegenheit aufgeladen werden kann, und dass bei einer Herstellung der Netzverbindung die eine oder die mehrere oder alle Rollen (2) selbsttätig in die Bremsstellung versetzt werden.

9. Verfahren nach einem der Ansprüche 5 bis 8, **dadurch gekennzeichnet, dass** die Verfahreinheit über einen Akkumulator (7) verfügt, der mittels einer Verbindung zum elektrischen Netz, vorzugsweise über einen Netzstecker (8), bei Bedarf bzw. Gelegenheit aufgeladen werden kann, und dass bei einer Herstellung der Netzverbindung der Fahrantrieb nicht aktiviert werden kann.

## Claims

1. Control of rollers (2) mounted on a movable part such as, for example, a hospital bed (1), wherein one, several or all of the rollers (2) have a brake mechanism whereby the one or the several or all the rollers can be set to a direction-setting position, a release position and automatically to a brake position, wherein further preferably all the rollers (2) can be actuated electrically and one or several or all the rollers (2) can additionally be actuated manually and wherein further an additional roller (3) with a wheel having an activatable travel drive is provided, whereby the travel drive can only be activated when the one, several or all of the rollers (2) having a braking mechanism is located in the release position or the direction-setting position, **characterized in that** the automatic setting of the one or several or all of the rollers to the brake position can only be made when the travel drive is not activated.

2. The control according to claim 1, **characterized in that** the additional roller (3) is movable between a lowered and a raised position.

3. The control according to any one of claims 1 or 2, **characterized in that** the movable unit has a rechargeable battery (7) which can be charged by means of a connection to the electrical mains, preferably via a mains plug (8), when required or from time to time, and that when a mains connection is made, the one or several or all of the rollers (2) are automatically set to the brake position.

4. The control according to any one of claims 1 to 3, **characterized in that** the movable unit has a rechargeable battery (7) which can be charged by means of a connection to the electrical mains, preferably via a mains plug (8), when required or from time to time, and that when a mains connection is made, the travel drive cannot be activated.

5. Method for controlling rollers (2) mounted on a movable part, wherein one, several or all of the rollers (2) have a brake mechanism whereby the one or the several rollers can be set to a direction-setting position, a release position and automatically to a brake position, wherein further preferably all the rollers (2) can be actuated electrically and the one or several or all of the rollers (2) can additionally be actuated manually, an additional roller (3) is provided with a wheel having an activatable travel drive and the travel drive can only be activated when the one or several or all of the rollers (2)having a brake-mechanism is located in the release position or the direction-setting position, wherein furthermore the automatic setting of the one or several or all of the rollers to the brake position can only be made when the travel drive is not activated.

6. The method for control according to claim 5, **characterized in that** the movable part is a hospital bed (1).

7. The method for control according to any one of claims 5 or 6, **characterized in that** the additional roller (3) can be moved between a lowered and a raised position.

8. The method for control according to any one of claims 5 to 7, **characterized in that** the movable unit has a rechargeable battery (7) which can be charged by means of a connection to the electrical mains, preferably via a mains plug (8), when required or from time to time, and that when a mains connection is made, the one or several or all of the rollers (2) are automatically set to the brake position.

9. The method according to any one of claims 5 to 8, **characterized in that** the movable unit has a rechargeable battery (7) which can be charged by means of a connection to the electrical mains, preferably via a mains plug (8), when required or from time to time, and that when a mains connection is made, the travel drive cannot be activated.

## Revendications

1. Commande de roulettes (2) montées à un élément mobile tel que par exemple un lit d'hôpital (1), dans laquelle une, plusieurs ou toutes les roulettes présentent un dispositif de freinage au moyen duquel ladite roulette ou pluralité de roulettes ou toutes les roulettes peut, respectivement peuvent être placées dans une position de blocage de direction, une position de libération et automatiquement dans une position de freinage, dans laquelle en outre toutes les roulettes (2) peuvent être actionnées électriquement et une, plusieurs ou toutes les roulettes (2) peuvent en plus être actionnées manuellement, et dans laquelle est prévue de surcroît une roulette additionnelle (3) avec une roue pourvue d'un dispositif d'entrainement activable, dans laquelle le dispositif d'entrainement ne peut être activé que lorsque la roulette (2), la pluralité de roulettes (2) ou toutes les roulettes (2) qui présentent un dispositif de freinage se trouvent dans la position de libération ou dans la position de blocage de direction, **caractérisée en ce que** le placement automatique de la roulette ou la pluralité de roulettes ou de toutes les roulettes dans la position de freinage ne peut être opéré que lorsque le dispositif d'entrainement n'est pas activé.

2. Commande selon la revendication 1, **caractérisée en ce que** la roulette additionnelle (3) peut être déplacée entre une position abaissée et une position relevée.

3. Commande selon l'une des revendications 1 ou 2, **caractérisée en ce que** l'unité mobile dispose d'un accumulateur (7), lequel peut être rechargé en cas de besoin ou à l'occasion, au moyen d'une liaison au réseau électrique, de préférence par le biais d'une fiche électrique (8), et **en ce que** la roulette (2) ou pluralité de roulettes (2) ou toutes les roulettes (2) sont automatiquement placées dans la position de freinage lorsqu'une liaison au réseau est établie.

4. Commande selon l'une des revendications 1 à 3, **caractérisé en ce que** l'unité mobile dispose d'un accumulateur (7), lequel peut être rechargé en cas de besoin ou à l'occasion, au moyen d'une liaison au réseau électrique, de préférence par le biais d'une fiche électrique (8), et **en ce que** le dispositif d'entrainement ne peut pas être activé lorsqu'une liaison au réseau est établie.

5. Procédé de commande de roulettes (2) montées à un élément mobile, dans lequel une, plusieurs ou toutes les roulettes présentent un dispositif de freinage et qui peut être placée ou peuvent être placées dans une position de blocage de direction, une position de libération et automatiquement dans une position de freinage, dans laquelle en outre toutes les roulettes (2) peuvent être actionnées électriquement et une, plusieurs ou toutes les roulettes (2) peuvent en plus être actionnées manuellement, une roulette additionnelle (3) comporte roue pourvue d'un dispositif d'entrainement activable et le dispositif d'entrainement ne peut être activé que lorsque la roulette (2), la pluralité de roulettes (2) ou toutes les roulettes (2) qui présentent un dispositif de freinage se trouvent dans la position de libération ou dans la position de blocage de direction, dans lequel de surcroît le placement automatique de la roulette ou la pluralité de roulettes ou de toutes les roulettes dans la position de freinage ne peut être opéré que lorsque le dispositif d'entraînement n'est pas activé.

6. Procédé de commande selon la revendication 5, **caractérisé en ce que** l'élément mobile est un lit d'hôpital (1).

7. Procédé de commande selon l'une des revendications 5 ou 6, **caractérisé en ce que** la roulette additionnelle (3) peut être déplacée entre une position abaissée et une position relevée.

8. Procédé de commande selon l'une des revendications 5 à 7, **caractérisé en ce que** l'unité mobile dispose d'un accumulateur (7), lequel peut être rechargé en cas de besoin ou à l'occasion, au moyen d'une liaison au réseau électrique, de préférence par le biais d'une fiche électrique (8), et **en ce que** la roulette (2) ou pluralité de roulettes (2) ou toutes les roulettes (2) sont automatiquement placées dans la position de freinage lorsqu'une liaison au réseau est établie.

9. Procédé selon l'une des revendications 5 à 8, **caractérisé en ce que** l'unité mobile dispose d'un accumulateur (7), lequel peut être rechargé en cas de besoin ou à l'occasion, au moyen d'une liaison au réseau électrique, de préférence par le biais d'une fiche électrique (8), et **en ce que** le dispositif d'entrainement ne peut pas être activé lorsqu'une liaison au réseau est établie.
